Europäisches Patentamt

European Patent Office

Office européen des brevets

(19)

(11) Publication number: **0 107 338**
A2

# (12) EUROPEAN PATENT APPLICATION

(21) Application number: 83305524.7

(22) Date of filing: 20.09.83

(51) Int. Cl.³: **G 01 B 3/22,** G 01 D 7/00

(30) Priority: 22.10.82 JP 184669/82

(71) Applicant: Katayama, Ichiro, No. 23-1, 2-chome, Chuo, Ohta-ku Tokyo (JP)

(43) Date of publication of application: 02.05.84 Bulletin 84/18

(72) Inventor: Katayama, Ichiro, No. 23-1, 2-chome, Chuo, Ohta-ku Tokyo (JP)

(74) Representative: Evans, David Charles et al, F.J. CLEVELAND & COMPANY 40-43, Chancery Lane, London, WC2A 1JQ (GB)

(84) Designated Contracting States: CH DE FR GB IT LI

(54) Displaying device for dial gauge.

(57) The present invention provides a displaying device for dial gauge which comprises a display panel, a digital displaying member for digitally displaying measuring value of dimension of an object to be measured, and an analogue displaying member which operates in synchronism with the digital displaying member. Both of the digital and the analogue displaying members are provided on the display panel. It is, accordingly, very easy and convenience to read and confirm a scaling value, even when the scaling value changes instantaneously and continuously.

ACTORUM AG

0107338

- 1 -

"DISPLAYING DEVICE FOR DIAL GAUGE"

DESCRIPTION

The present invention relates to a display device for measuring devices, and more particularly to an improvement of a displaying device for a dial gauge.

Measuring devices for use with measuring dimensions or displacement of an object to be measured, such as a micrometer, dial gauge, or hardness testers are employed to measure precisely length, width, thickness, and/or displacement of an object.

In conventional display devices of the dial gauges, digital displaying methods have been widely employed to indicate a measured value of the dimension of the length, the width, thickness or the displacement of the dimension of the object to be measured. In thus prior art displaying devices, it is hard or impossible to read and confirm the measuring value, when the measuring value changes instantaneously and continuously.

It is, accordingly, an object of the present invention to provide an improved display device for a dial gauge by which measuring value can be read easily and confirmed.

More specifically, it is an object of the present invention to provide a displaying device which is convenience to read and confirm visually by providing an analogue displaying member and a digital displaying member.

According to the present invention, there is provided a display device for dial gauge which comprises a display panel, measuring means for measuring the dimension of an object to be measured, scaling means for scaling the dimension of the object in responsive to measurement of the measuring means, and displaying means for displaying a scaling value scaled by the scaling means, said displaying means comprising a digital display member being arranged in the display panel and for digitally displaying the scaled value by thescaling means and an analogue member being arranged in the display panel and for analogically displaying the scaling value scaled by the scaling means in synchronism with displaying operation of the digital displaying member.

In accordance with the present invention, disadvantages described above in the prior art are avoided completely by using a digital display member for digitally displaying scaling values scaled by scaling member and an analogue display member for analogically displaying the scaling value scaled by the scaling member in synchronism with digital displaying member.

Following is a description by way of example only and with reference to the accompanying drawings of methods of carrying the invention into effect.

In the drawings:-

Figure 1 is an elevational front view of a dial gauge having a displaying device of the present invention.

Figure 2 is an elevational side sectional view of the dial gauge of Figure 1.

Figure 3 is a block diagram of the electronic circuitry of the displaying device of the present invention.

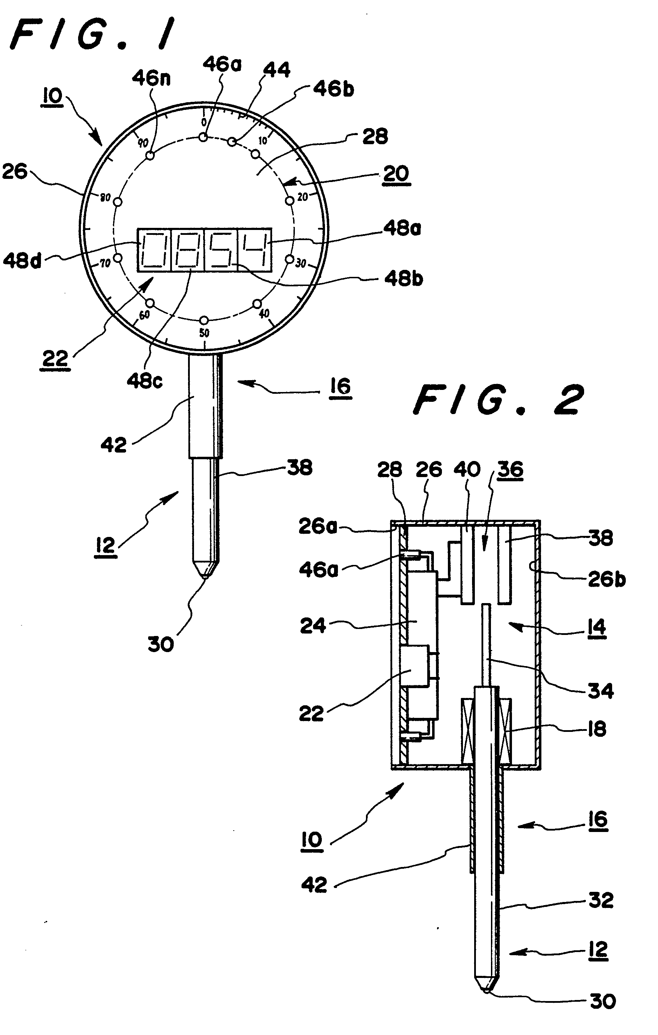

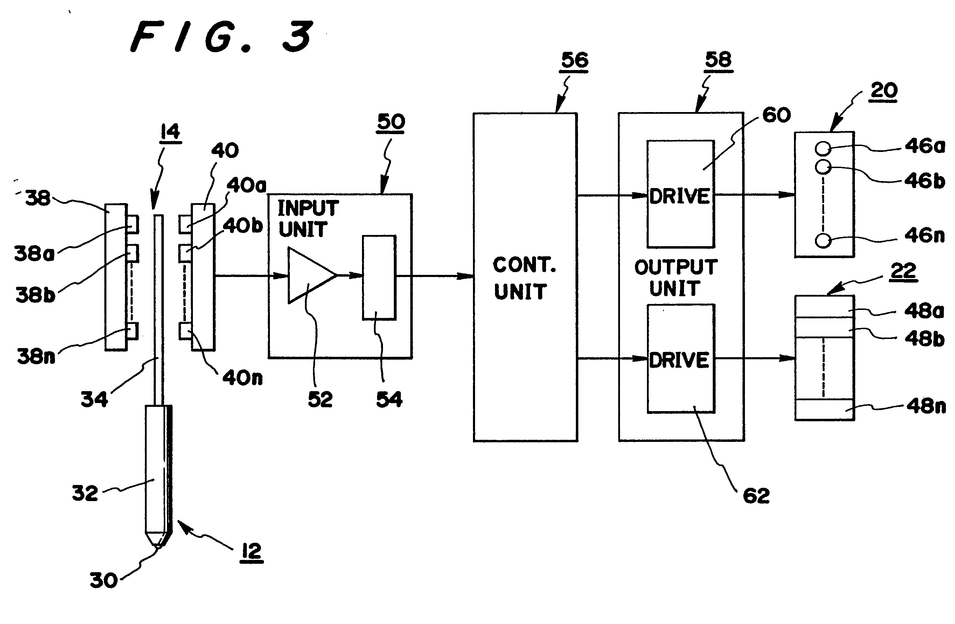

Referring to Figures 1 and 2 of the drawings, there is shown a greatly simplified dial gauge having a displaying device of the present invention. The dial gauge comprises, substantially, a housing 10, a measuring member 12 for measuring a length, a width and the like of an object to be measured, a scaling member 14 for scaling the dimension of an object to be measured, a guide member 16 for guiding a measuring motion of the measuring member 12, an actuating member 18 for actuating the measuring member 12, and displaying means for displaying a value of the dimension scaled by the scaling member 14.

An important feature of the present invention is that the displaying means comprises an analogue displaying member 20 and a digital displaying member 22. Displaying operations of the analogue displaying member 20 and the digital displaying member 22 are controlled by a display control circuit arrangement 24.

As is best shown in Figures 1 and 2, a housing 10 is provided with a tubular casing 26 having an open end portion 26a and a closed portion 26b and a display panel 28 mounted on a front portion of the casing 26. The measuring member 12 comprises a measuring contact point 30, a sliding member in the form of a spindle 32 carrying the measuring contact point 30. The scaling member 14 comprises a glass scale 34 fastened to the spindle 32 and a read sensor 36 for reading a scaling value of the glass scale 34. The read sensor 36 includes a light source 38 and a light receiving member 40 for converting an optical signal to an electric signal. The guide member 16 includes a stem 42 for guiding the sliding motion of the spindle 32. The actuating member includes a gear mechanism and a spring mechanism (not shown in the drawings).

In more detail, the stem of the guide member 16 is secured to the casing 26 so as to be in communication with an inner portion of the casing 26. The spindle 32 of the measuring member 12 is movably inserted into the stem 42 of the guide member 16. The measuring contact point 30 is fastened to an end portion of the spindle 32. An end portion of the glass scale 34 is secured to the other portion of the spindle 30. The light source 38 of the read sensor 36 is incorporated in the housing 10, and the light receiving member 40 is provided in the housing 10 so as to be opposed to the light source 38. The control circuit arrangement 24 is formed with an integration circuit chip (IC chip) and provided in the housing 10. The display panel 28 and the control circuit arrangement 24 can be arranged in a position spaced apart from the housing 10.

As is best shown in Figure 1, scale marks are provided in a circumferential edge portion of the display panel 28.

emitting diodes 46a-46n. The digital displaying member 22 includes a digital displaying elements 48a, 48b, 48c and 48d. Each of the light emitting diodes 46a-46n is located to a position opposed to the corresponding to the scaling mark of the scaling portion.

The displaying device disclosed herein offers exceptional versatility and accuracy the use of a control circuit arrangement such as a microcomputer to control the operation of the instrument and to performs or other devices. The electronic circuitry of the displaying device is seen in Figure 3 to comprises three functional units.

As is shown in Figure 3, the control circuit arrangement comprises an input unit 50 including an amplifier circuit 52 and an analogue-digital converter 54, a control unit 56 and an output unit 58 including a first driver circuit 58 and a second driver circuit 60. The amplifier circuit 52 amplifies an analogue signal from the scaling member 14. An amplified analogue signal from the amplifier circuit 52 is converted to a digital signal by means of the analogue-digital converter 54. The control unit 56 includes a synchronous counter and calculates the digital signal supplied from the analogue-digital converter 54 of the input unit 50. The counter of the control unit 56 regists the digital signal and overflows digital control signals. The overflowed digital signals from the control unit 56 are supplied to the first driver circuit 60 and the second driver circuit 62 of the output unit 58. The first driver circuit 60 converts the digital signals to analogue signals and drives the analogue displaying member 20. The second driver circuit 62 of the output unit 58 drives the digital displaying member 22 responsive to the digital control signals from the second driver circuit 62.

In operation, the spindle 32 is usually positioned so as to be located to a reference position by the actuating member 18. The measuring contact point 30 is moved toward the inner portion of the casing 26 together with the spindle 32 in measuring the object to be measured. When the spindle 32 slides in the guide member 16, the glass scale 34 of the scaling member 14 is inserted between the light source 38 and the light receiving member 40 of the read sensor 36.

As is shown in Figure 3, the light source 38 is provided with a plurality of lamps in the form of light emitting diodes 38a-38n arranged along with a moving direction of the glass scale 34. The light receiving member 40 is provided with a plurality of photo-electric converting elements in the form of photo-diodes 40-40n arranged so as to be opposed to the light emitting diodes 38a-38n respectively.

The read sensor 36 senses the differential movement of the glass scale 34 in response to the position of the glass scale 34. Namely, the light receiving member 40 of the read sensor 36 generates an electric signal corresponding to the scaled value of the glass scale 34. The electric analogue signal produced from the read sensor 36 is amplified by the amplifier circuit 52 of the input 50. The electric analogue signal is converted to the digital signal by the analogue-digital converter circuit 54 of the input unit 50. The input unit 50 supplys the digital signal to the control unit 56. The control unit 56 counts the digital signal inputted from the input unit 50 and overflows digital signals corresponding to the scaled value by the scaling member 14. The overflowed signals from the counter of the control unit 56 are supplied to the first driver circuit 60 and the second driver circuit 62 of the output unit 58. The first driver circuit 60 converts the digital signal from the control unit 56 to the analogue signal. The analogue signal corresponding to the scaling value is supplied to the analogue displaying member 20. The second driver circuit 62 supplys the digital signal to the digital displaying member 20.

Each of the light emitting diodes 46a-46n lights responsive to a driving signal from the first driver circuit 60. The displaying elements of the digital displaying member 22 display the numeric characters responsive to binary codes from the second driver circuit 62.

As described foregoing, the analogue displaying member 20 and the digital displaying member 22 are arranged on the display panel 28. The displaying elements in the form of the light emitting diodes 46a-46n are positioned so as to

0107338

be located each scale of the scaling portion 44 and light in synchronism with the operation of the displaying member 20 corresponding to a pointer which is used in the conventional dial gauge. A liquid crystal can be used to display the scaling value linearly instead of the light emitting diodes 46a-46n.

According to the present invention, measuring values can be read visually by means of both of analogue displaying means and digital displaying means. Accordingly, it is very easy and convenience to read and confirm the measuring and scaling values of an object to be measured, even when the measuring and scaling values change instantaneously and continuously.

0107338

## CLAIMS

1.  A displaying device for dial gauge comprising, in combination, a display panel, measuring means for measuring dimension of an object to be measured, scaling means for scaling the dimension of said object corresponding to measurement of said measuring means, and displaying means for displaying a scaling value scaled by said scaling means, said displaying means comprising a digital displaying member being provided on said display panel and for digitally displaying said scaling value scaled by the scaling means and an analogue displaying member being provided on said display panel and for analogically displaying the scaling value scaled by said scaling means in synchronism with said digital displaying member.

2.  A displaying device for dial gauge as claimed in claim 1, wherein said analogue displaying means further comprises a scaling portion marked on said displaying panel along with said analogue displaying member.

3.  A displaying device for dial gauge as claimed in claim 1, wherein said displaying means further comprises a display controlling circuit arrangement for controlling displaying operation of said digital displaying member and displaying operation of said analogue displaying member.

4.  A displaying device for dial gauge as claimed in claim 1, wherein said measuring means comprises a measuring member including a measuring contact point and a spindle carrying said measuring contact point in measuring the dimension of said object to be measured.

5. A displaying device for dial gauge as claimed in claim 1, wherein said scaling means comprises a scaling member including a scaling segment moved responsive to the measuring value of said object to be measured and a read sensor for reading said scaling value scaled by said scaling segment.

6. A displaying device for dial gauge comprising gauging means including a housing having a tubular casing and a display panel mounted on said casing, measuring means for measuring dimension of an object to be measured and including a measuring contact point, a sliding member carrying said measuring contact point in measuring the dimension of said object, scaling means for scaling the dimension of said object corresponding to a measuring value measured by said measuring means, guide means for guiding a measuring motion of said sliding member of the measuring means, and displaying means for displaying a scaling value scaled by said scaling means, said displaying means comprising a digital displaying member for digitally displaying said scaling value scaled by the scaling means and an analogue displaying member for analogically displaying the scaling value scaled by said scaling means in synchronism with digital displaying operation of said displaying member and a display controlling circuit arrangement for controlling displaying operation of said digital displaying member and displaying operation of said analogue displaying member.

7. A displaying device for dial gauge as claimed in claim 6, wherein said analogue displaying means further comprises a scaling portion marked on said displaying panel along with said analogue displaying member.

8. A displaying device for dial gauge as claimed in claim 6, wherein said measuring means comprises a measuring member including a measuring contact point in measuring the dimension of said object to be measured.

9. A displaying device for dial gauge as claimed in claim 6, wherein said scaling means comprises a scaling member including a scaling segment moved responsive to the measuring value of said object to be measured and a read sensor for reading said scaling value scaled by said scaling segment.

10. A displaying device for dial gauge as claimed in claim 6, wherein said display controlling circuit arrangement comprises an input unit including an amplifier circuit for amplifying an electrical analogue signal from said scaling member and an analogue-digital converter circuit for converting said analogue signal amplified by said amplifier circuit to a digital signal, a control unit including a synchronous counter for counting said digital signal and overflowing a digital signal, and an output unit including a first driver circuit for converting said digital signal overflowed from said control unit to an analogue driving signal for driving said analogue displaying member and a second driver circuit for driving said digital displaying member responsive to said overflowed signal from said control unit.

1/2

0107338

**FIG. 1**

**FIG. 2**

FIG. 3

20

46a
46b
46n

22

48a
48b
48n

58

60 DRIVE

OUTPUT UNIT

62 DRIVE

56

CONT. UNIT

50

INPUT UNIT

52

54

40
40a
40b
40n

14

38
38a
38b
38n

12

30

32

34